# EUROPÄISCHE PATENTSCHRIFT

(11) **EP 1 288 093 B1**
(45) Veröffentlichungstag und Bekanntmachung des Hinweises auf die Patenterteilung: **30.09.2009**
(21) Anmeldenummer: 02018675.5
(22) Anmeldetag: 21.08.2002
(51) Int. Cl.: B60T 10/02, B60T 1/087

(54) **Hydrodynamischer Retarder**
Hydrodynamic retarder
Ralentisseur hydrodynamique

(30) Priorität: 25.08.2001 DE 10141794
(43) Veröffentlichungstag der Anmeldung: 05.03.2003
(73) Patentinhaber: ZF Friedrichshafen AG, 88038 Friedrichshafen (DE)
(72) Erfinder: Buri, Gerhard, 88677 Markdorf (DE); Sauter, Frank, 88074 Meckenbeuren (DE); Grupp, Bernhard, 88250 Weingarten (DE)
(74) Vertreter: Zietlow, Karl-Peter

(56) Entgegenhaltungen:
- WO-A-01/31221
- WO-A-97/33077
- DE-A- 2 557 585
- DE-A- 4 004 773

## Beschreibung

Die vorliegende Erfindung betrifft einen hydrodynamischen Retarder für ein Kraftfahrzeug gemäß dem Oberbegriff des Patentanspruchs 1.

Neben den Betriebsbremsen eines Fahrzeugs, insbesondere eines Nutzfahrzeugs, die im Regelfall einem Verschleiß unterliegende Reibungsbremsen sind, werden zusätzliche Verzögerungseinrichtungen mehr und mehr auch vom Gesetzgeber gefordert und von den Fahrzeugherstellern angeboten.

Derartige verschleißfreie zusätzliche Verzögerungseinrichtungen in Form von Retardern und Motorbremsen können dazu verwendet werden, die Fahrzeuggeschwindigkeit im Gefälle konstant zu halten.

Zu den Retardern werden sowohl zusätzlich am Getriebe angeordnete hydrodynamische, hydrostatische oder elektrodynamische Bremseinrichtungen gezählt, sowie auch Systeme, die in Form eines "Intarders" innerhalb des Getriebegehäuses vorgesehen sind.

Retarder werden bei Nutzfahrzeugen vor allem eingesetzt, um die beispielsweise bei Bremsung aus hoher Fahrgeschwindigkeit anfallende kinetische Bremsenergie aufzunehmen und in Wärme umzusetzen, sind aber auch für geforderte Dauerbremsleistungen gut geeignet, beispielsweise bei lang andauernder Bergabfahrt.

Bei hydrodynamischen Retardern wird die Strömungsenergie einer Flüssigkeit zum Bremsen benutzt, wobei das physikalische Wirkprinzip dem einer hydrodynamischen Kupplung mit feststehender Turbine entspricht. Demnach weist ein hydrodynamischer Retarder einer sich im Leistungsfluß befindlichen Rotor und einen mit dem Retardergehäuse fest verbundenen Stator auf. Beim Betätigen des Retarders wird eine der gewünschten Bremsleistung entsprechende Ölmenge in den Schaufelraum eingebracht, wobei der drehende Rotor das Öl mitnimmt, das sich am Stator abstützt, wodurch eine Bremswirkung auf die Rotorwelle erzeugt wird.

WO 01/31221 wird als gattungsbildender Stand der Technik angesehen und offenbart einen Hydrodynamischen Retarder mit einem Kreislauf zur Steuerung des Retarders.

Ein Beispiel einer Bremsanlage mit einem hydrodynamischen Retarder ist in der DE-C-198 53 830 beschrieben. Der hydrodynamische Retarder weist dabei einen Rotor und einen Stator auf, die ihrerseits einen Arbeitsraum miteinander bilden sowie eine Kühleinrichtung zum Kühlen des Arbeitsmediums, einen Vorratsbehälter zur Aufnahme des Arbeitsmediums und eine Steuereinrichtung zum Aufbringen eines Druckes auf das im Vorratsbehälter enthaltene Arbeitsmedium zwecks Einstellens des Kühlungsgrades des Arbeitsraumes, wobei Retarder und Kühleinrichtung im Bremsbetrieb in Sinne eines Kreislaufes vom Arbeitsmedium durchströmt werden. Das gesamte im Vorratsbehälter enthaltene Arbeitsmedium wird zur besseren Wärmeabfuhr in den Kreislauf eingebracht, wobei der Vorratsbehälter als Bestandteil des Kreislaufes durchströmt wird. Damit wird erreicht, dass sich das Arbeitsmedium aufgrund der nunmehr größeren aktiven Menge langsamer erwärmt, da die im Vorratsbehälter verbleibende Menge des Arbeitsmediums, die bis zu 50% der Gesamtölmenge betragen kann, zur Wärmeabfuhr mit herangezogen wird.

Zur Steuerung werden bei Retardern nach dem Stand der Technik im wesentlichen zwei verschiedene Prinzipien angewandt.

Zum einen werden pneumatische Steuerungssysteme eingesetzt, bei denen der Regeldruck des Retarders durch einen Luftdruck direkt auf den Arbeitsmedium- bzw. Ölspiegel eingestellt wird. Nachteilig ist hier das begrenzte Regelverhalten und die Notwendigkeit einer Arbeitsmedium-Luft-Trennungseinheit sowie das Vorhandensein einer fahrzeugseitigen Pneumatikversorgung.

Zum anderen werden Steuerungen eingesetzt, bei denen der hydraulische Druck durch eine permanent angetriebene Hydraulikpumpe, bevorzugterweise eine Zahnradpumpe, bereitgestellt wird. Nachteilig ist bei diesem Konzept der drehzahlabhängige Volumenstrom der verwendeten Pumpe, was insbesondere bei niedrigen Drehzahlen einen Befüllspeicher und bei hohen Drehzahlen große Ventil- und Strömungsquerschnitte erforderlich macht.

Es sind aus der DE 199 30 356 A1 der Anmelderin Automatgetriebe für Kraftfahrzeuge bekannt, mit einer Hydraulikpumpe zur Steuerung, Kühlung und Schmierung, deren Fördermenge eine Funktion der Motordrehzahl ist, wobei eine zusätzliche Hydraulikpumpe vorgesehen ist, die dem Hydraulikkreis des Getriebes zur Steuerung, Kühlung und Schmierung bedarfsgerecht zuschaltbar ist.

Der vorliegenden Erfindung liegt die Aufgabe zugrunde, einen hydrodynamischen Retarder der eingangs genannten Art mit einer Hydraulikpumpe anzugeben, welcher mit einem sehr einfachen Aufbau und technischen Aufwand eine einfache Steuerung des Retarders und eine ideale Dimensionierung von Pumpe und Filter ermöglicht.

Zudem soll auf einen zusätzlichen Befüllspeicher verzichtet werden.

Ferner soll ein Verfahren zur Steuerung eines hydrodynamischen Retarders angegeben werden.

Diese Aufgabe wird für einen hydrodynamischen Retarder durch die Merkmale des kennzeichnenden Teils des Patentanspruchs 1 gelöst. Ein Verfahren zum Steuern eines Retarders ist Gegenstand des Patentanspruchs 11. Weitere Ausgestaltungen gehen aus den entsprechenden Unteransprüchen hervor.

Demnach wird vorgeschlagen, zur Betreiben eines Retarders eine Hydraulikpumpe einzusetzen, welche im Volumen verstellbar ist. In Betracht kommen hier im wesentlichen Radial- und Axial-Kolbenpumpen aber auch Flügelzellenpumpen sowie verstellbare Innenzahnradpumpen.

Mit derartigen Pumpen kann der Volumenstrom erfindungsgemäß unabhängig von der Fahrzeuggeschwindigkeit bzw. Gelenkwellendrehzahl oder Retarderdrehzahl eingestellt werden.

Gemäß einer ersten Ausführungsform der vorliegenden Erfindung wird die Hydraulikpumpe so geschaltet bzw. geregelt, dass sich über einen weiten Drehzahlbereich ein konstanter Volumenstrom einstellt, der zum Befüllen und Regeln des Retarders ausreichend ist.

Diese Konstruktion weist den Vorteil auf, dass kein Befüllspeicher benötigt wird, wobei eine einfache Ansteuerung der Pumpe bei einem schnellen Ansprechverhalten gewährleistet ist. Außerdem ist die Ansprechzeit der Pumpe gleich der Wiederansprechzeit, so dass sich ein robustes zeitliches Verhalten ergibt.

Eine Weiterentwicklung sieht vor, dass die oben beschriebene Funktion der konstanten Förderung mittels eines Ventils abschaltbar oder auf einen niedrigeren Wert verstellbar ist. Eine Zuschaltung erfolgt dann nur im Bremsbetrieb. Als weiterer Vorteil ergibt sich eine geringere Leerlaufleistung im Nichtbremsbetrieb, da die Pumpe auf eine minimale Förderung oder eine Nullförderung gestellt werden kann. Dies resultiert zudem in einer relevanten Kraftstoffersparnis. Außerdem kann für den Fall eines gemeinsamen Ölhaushalts mit dem Getriebe die Getriebekühlung abgeschaltet werden.

Im Rahmen einer weiteren Variante der Erfindung ist vorgesehen, für die Hydraulikpumpe zwei Schaltpositionen vorzusehen, wobei die Zuschaltung der Pumpe hydraulisch, pneumatisch oder elektromagnetisch erfolgen kann.

Eine Schaltposition entspricht dem Nichtbremsbetrieb und resultiert in einer Minimal- oder Nullförderung; die zweite Schaltposition entspricht dem Bremsbetrieb und veranlasst eine Vollförderung oder - wenn gewünscht - eine definierte Teilförderung.

Auch in diesem Fall wird kein Befüllspeicher benötigt; zudem ist eine einfache Ansteuerung der Pumpe bei einem schnellen Ansprechverhalten gewährleistet.

Eine weitere Ausführungsform sieht vor, die Pumpe mittels einer variablen Größe, hydraulisch, pneumatisch oder elektromagnetisch derart anzusteuern, dass sich ein gewünschter Druck, der zugleich Retarderdruck oder eine das Bremsmoment charakterisierende Größe ist, einstellt.

Diese Variante weist den zusätzlichen Vorteil auf, dass die Pumpe die Regelfunktion übernimmt, wodurch ein Retarderregelventil nicht mehr erforderlich ist.
Im folgenden wird die Erfindung anhand der beigefügten Zeichnung näher erläutert.
In dieser stellen dar:
- Fig. 1: eine schematische Ansicht des Kreislaufs zur Steuerung des Retarders sowie der benötigten Elemente gemäß einer ersten Ausführungsform der vorliegenden Erfindung;
- Fig. 2: ein Fördermenge-Geschwindigkeits-Diagramm der Pumpe aus Fig. 1;
- Fig. 3: eine schematische Ansicht des Kreislaufs zur Steuerung des Retarders sowie der benötigten Elemente gemäß einer zweitenAusführungsform der vorliegenden Erfindung;
- Fig. 4: ein Fördermenge-Zeit-Diagramm der Pumpe aus Fig. 3;
- Fig. 5: ein Fördermenge-Zeit-Diagramm für eine variable Pumpe gemäß einer dritten Ausführungsform der Erfindung;
- Fig. 6: eine schematische Ansicht des Kreislaufs zur Steuerung des Retarders und der benötigten Elemente gemäß einer vierten Ausführungsform der Erfindung und
- Fig. 7: ein Ansteuerdruck-Retarderregeldruck-Diagramm für die Pumpe aus Fig. 6.

In den Figuren wird, um die Übersicht zu erleichtern, auf dem Fachmann bestens bekannte, übliche Merkmale eines hydrodynamischen Retarders, wie Rotor, Stator, Retardergehäuse verzichtet.

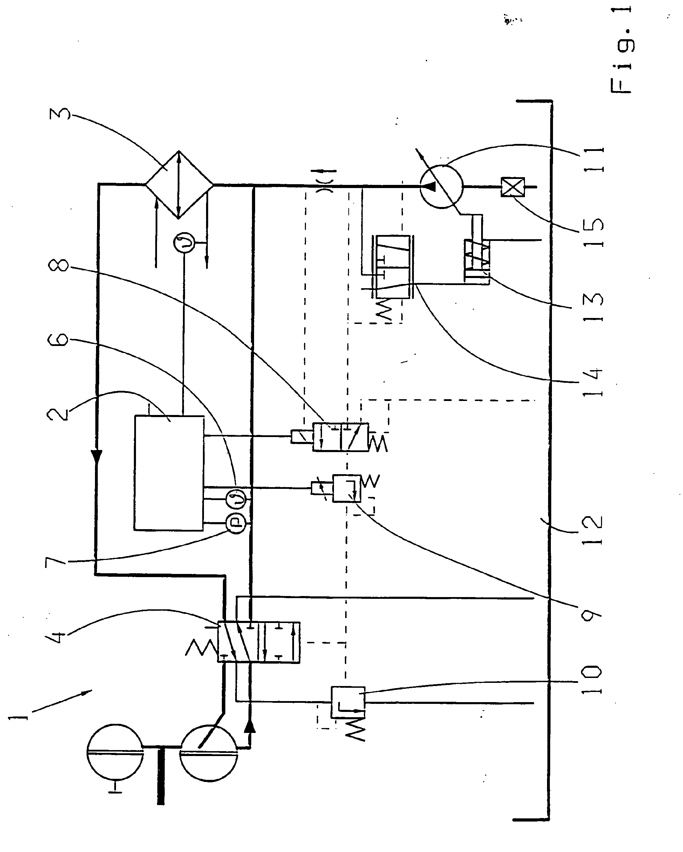

Gemäß Fig. 1 umfasst der Hauptkreislauf zur Steuerung eines hydrodynamischen Retarders 1 gemäß einer ersten Ausführungsform der Erfindung eine Steuer- und Regeleinheit 2, einen Wärmetauscher 3 und ein Umschaltventil 4. Ferner ist die Steuer- und Regeleinheit 2 mit Temperatursensoren für die Temperatur θ 6, verbunden, um die Temperatur zu überwachen. Des weiteren ist ein Drucksensor 7 zur Überwachung des Regeldrucks p vorgesehen. Die Steuer- und Regeleinheit 2 ist vorteilhafterweise mit dem CAN (Controller Area Network) verbunden. Die Steuer- und Regeleinheit 2 steuert ein Sicherheitsabschaltventil 8 und ein Proportionalventil 9 an. Der Regeldruck des Retarders wird mittels eines Regelventils 10 angesteuert.

Die Hydraulikpumpe 11 zum Fördern des Bremsmediums aus dem Retardersumpf 12 ist erfindungsgemäß so geschaltet bzw. geregelt, dass sich über einen weiten Drehzahlbereich ein konstanter Volumenstrom einstellt, der zum Befüllen und Regeln des Retarders ausreichend ist. Zu diesem Zweck ist eine mit einem Volumenregelventil 14 verbundene Verstellmechanik 13 vorgesehen. Zwischen Pumpe 11 und Retardersumpf 12 ist ein Filter 15 angeordnet.

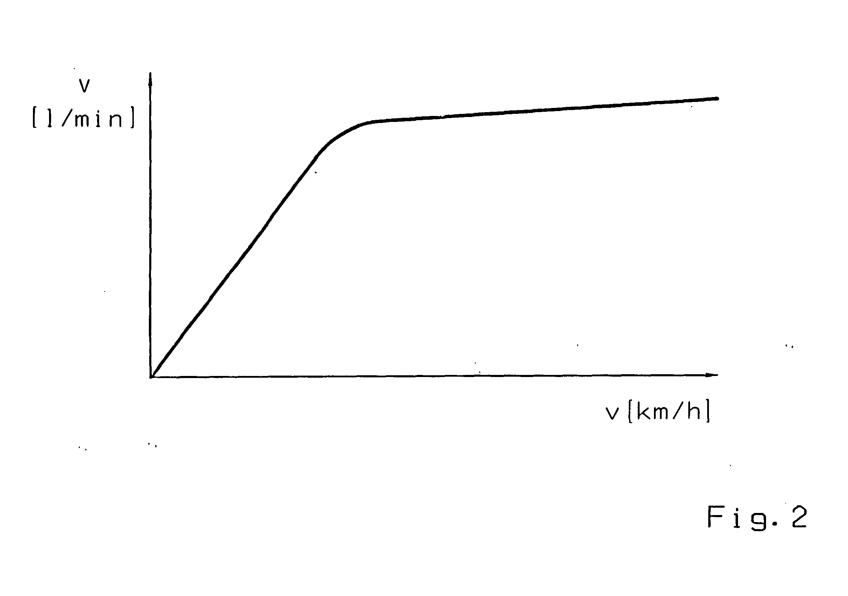

In Fig. 2 ist das erfindungsgemäße Verhalten der Pumpe 11 in Form eines Fördermenge-Geschwindigkeits-Diagramms gezeigt: Wie der Figur entnehmbar, stellt sich ab einer bestimmten Fahrzeuggeschwindigkeit v ein nahezu konstanter, von der Fahrzeuggeschwindigkeit unabhängiger Volumenstrom V ein.

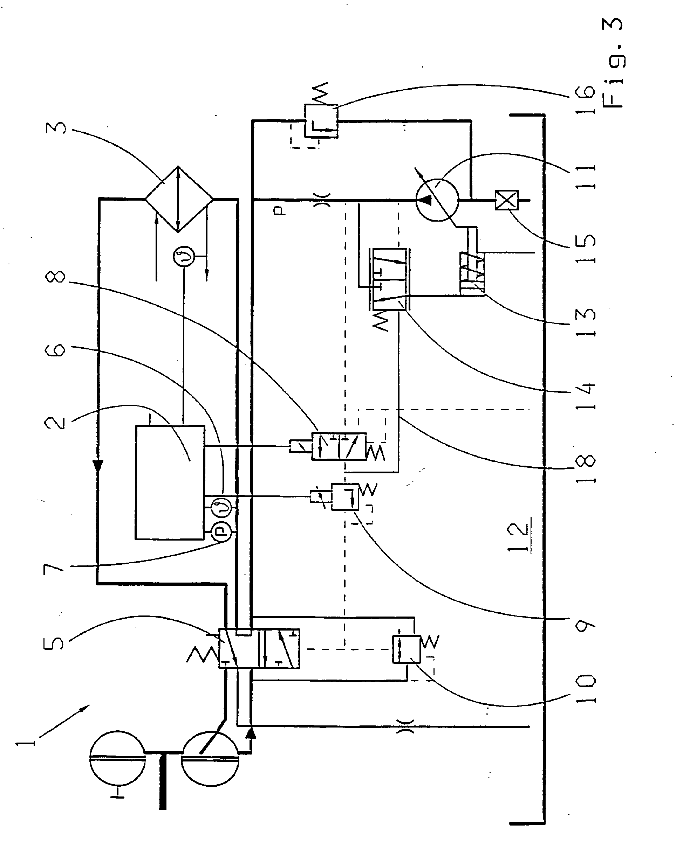

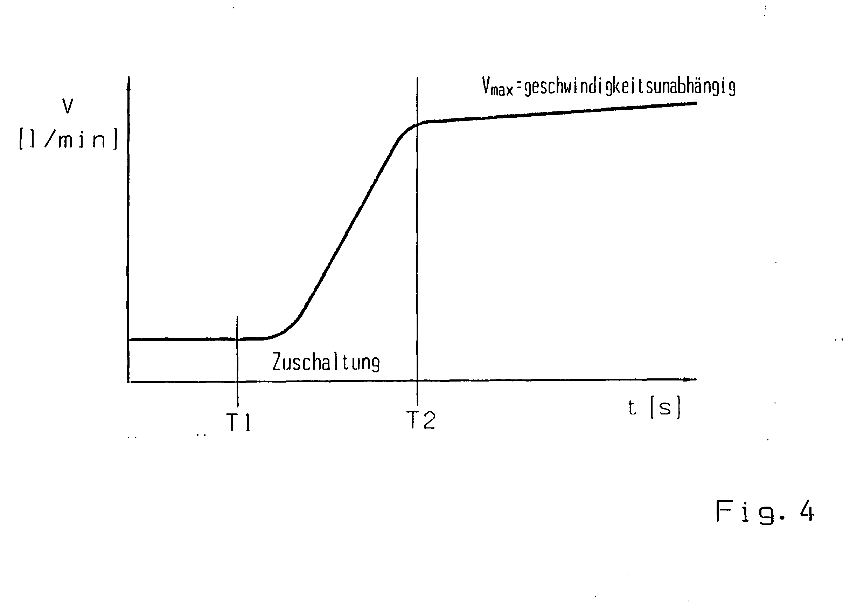

Fig. 3 zeigt einem dem Aufbau gemäß Figur 1 ähnlichen Aufbau. Zusätzlich zu den in Fig. 1 vorgesehenen Elementen ist ein weiteres Ventil 16 vorgesehen, welches im Bremsbetrieb den Hauptdruck begrenzt. Als Umschaltventil wird ein geändertes Umschaltventil 5 verwendet. Die Pumpe hat zwei definierte Schaltpositionen, welche mittels Leitung 18 angesteuert wird. Bevorzugterweise erfolgt eine Zuschaltung im Bremsbetrieb. Das Verhalten der Pumpe wird in der Fig. 4 anhand des gezeigten Fördermenge-Zeit-Diagramms erläutert: Die Zuschaltung erfolgt zu einem Zeitpunkt T_1; zum Zeitpunkt T_2 hat sich ein nahezu konstanter und von der Fahrzeuggeschwindigkeit unabhängiger Volumenstrom V eingestellt. Hierbei kann die Ansteuerung der Pumpe elektrisch, hydraulisch oder pneumatisch erfolgen.

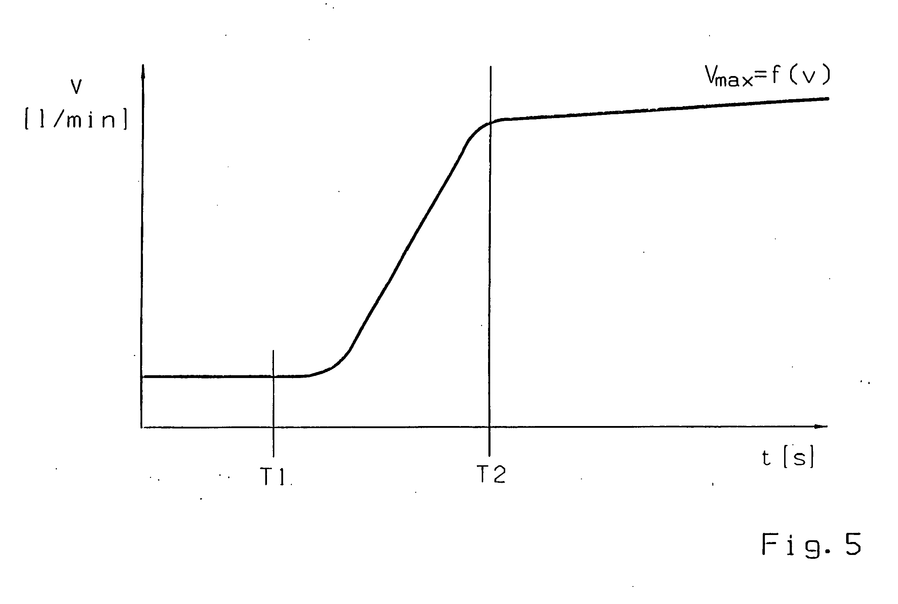

Gemäß Fig. 5 kann im Rahmen einer weiteren Variante der Erfindung die Pumpe - ebenfalls elektrisch, hydraulisch oder pneumatisch - so zugeschaltet bzw. angesteuert werden, dass mindestens zwei Schaltpositionen erreichbar sind. Besonders vorteilhaft ist die eine Schaltposition diejenige einer Null- oder Minimalförderung, geeignet für den Nichtbremsbetrieb, wohingegen die zweite einer Voll- oder einer definierten Teilförderung im Bremsbetrieb entspricht. In der Figur entspricht der Zeitpunkt T_1 dem Wechsel zwischen beiden Schaltpositionen.

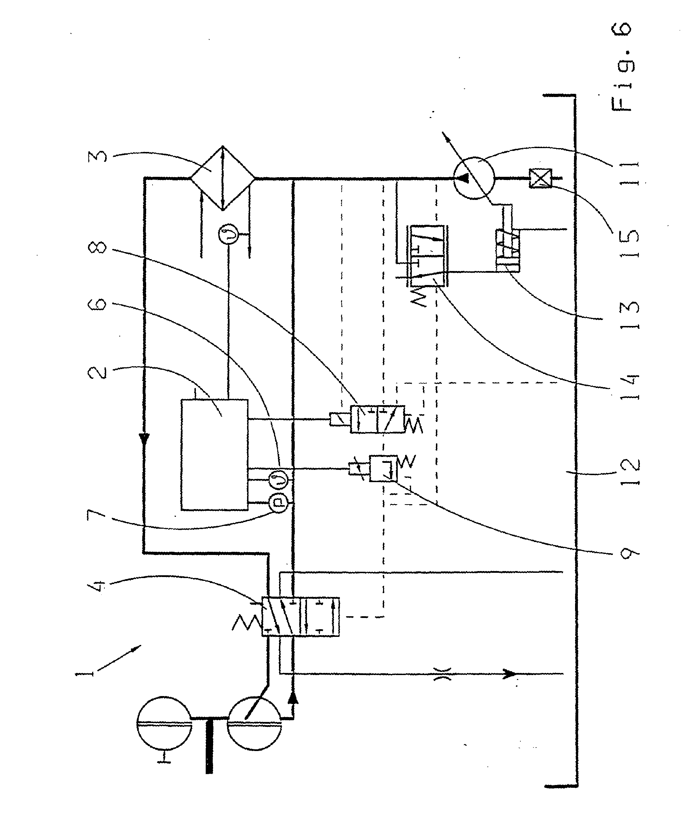

Fig. 6 zeigt einen dem Aufbau gemäß Fig. 1 ähnlichen Aufbau. Im Gegensatz zum Aufbau gemäß Fig. 1 ist kein Retarderregelventil 10 erforderlich, da hier die Pumpe 11 über das Volumenregelventil 14 und die Verstellmechanik 13 mittels einer variablen Größe hydraulisch, pneumatisch oder elektromagnetisch derart angesteuert wird, dass sich ein gewünschter Druck, der zugleich Retarderdruck oder eine das Bremsmoment charakterisierende Größe ist, einstellt.

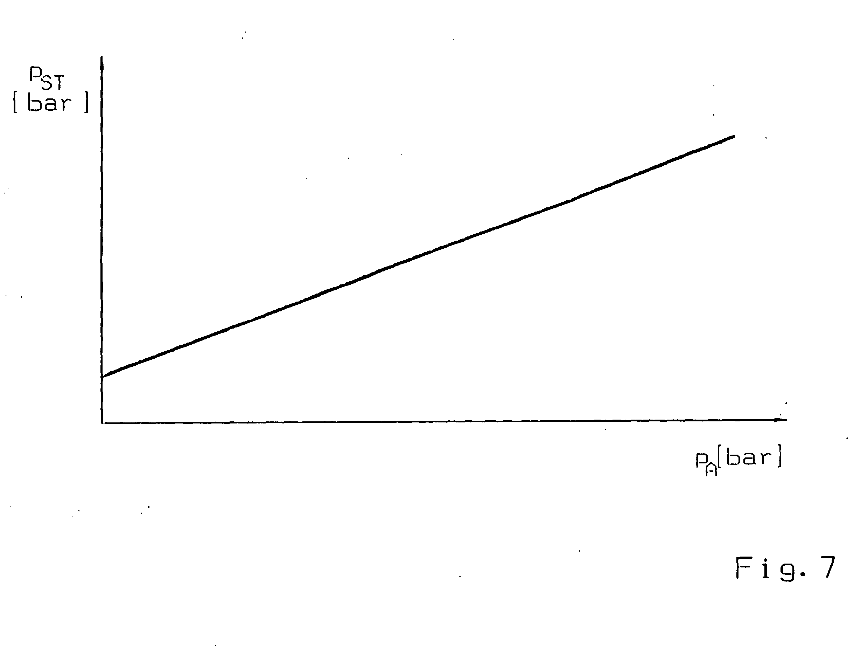

Das entsprechende Ansteuerdruck-Retarderregeldruck-Diagramm der Pumpe 11 ist Gegenstand der Fig. 7. Der sich einstellende Volumenstrom ist eine Funktion des Ansteuerdrucks und der Leckagen.

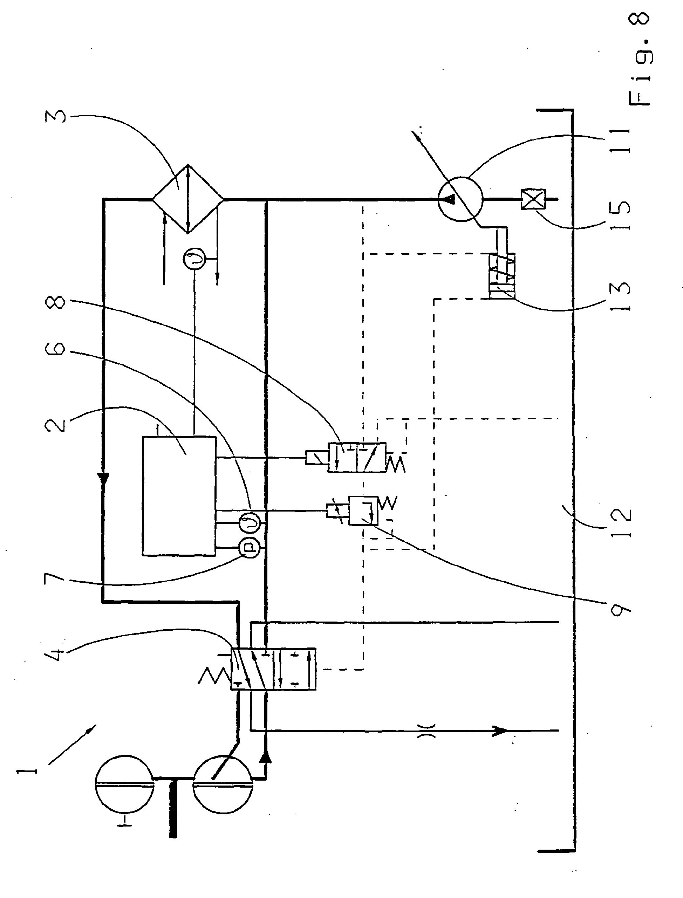

Die Fig. 8 zeigt die Anordnung nach Fig. 1 ohne die Verwendung des Volumenregelventils 14. Hier ist die Verstellmechanik 13 direkt angeschlossen an eine Leitung zwischen dem Umschaltventil 4 und dem Proportionalventil 9 einerseits und an eine Leitung zum Pumpenausgang andererseits. In dieser Anordnung lässt sich durch einfachen Aufbau das Ventil 14 einsparen.

Die erfindungsgemäßen Anordnungen sind sowohl für einen gemeinsamen als auch für einen getrennten Ölhaushalt mit dem Getriebe geeignet; zudem sind sie sowohl bei Primär- als auch bei Sekundärretardern implementierbar.

### Bezugszeichen

- 1: Retarder
- 2: Steuer- und Regeleinheit
- 3: Wärmetauscher
- 4: Umschaltventil
- 5: Umschaltventil
- 6: Temperatursensor
- 7: Drucksensor
- 8: Sicherheitsabschaltventil
- 9: Proportionalventil
- 10: Regelventil
- 11: Hydraulikpumpe
- 12: Retardersumpf
- 13: Verstellmechanik
- 14: Volumenregelventil
- 15: Filter
- 16: Druckbegrenzungsventil
- 18: Leitung

## Patentansprüche

1. Hydrodynamischer Retarder für ein Kraftfahrzeug mit einem Kreislauf zur Steuerung des Retarders (1), der eine Hydraulikpumpe (11), einen Wärmetauscher (3), ein Ventil (4, 5) und eine Steuer- und Regeleinheit (2) enthält, **dadurch gekennzeichnet, dass** die Hydraulikpumpe eine verstellbare Pumpe (11) ist, deren Fördervolumen verstellbar ist, derart, dass der Volumenstrom der Hydraulikpumpe (11) unabhängig von der Fahrzeuggeschwindigkeit bzw. Gelenkwellendrehzahl oder Retarderdrehzahl über eine Verstellmechanik (13) an der verstellbaren Hydraulikpumpe (11) einstellbar ist.

2. Hydrodynamischer Retarder nach Anspruch 1, **dadurch gekennzeichnet, dass** der Volumenstrom der Hydraulikpumpe (11) über ein Ventil (14) und die damit verbundene Verstellmechanik (13) einstellbar ist.

3. Hydrodynamischer Retarder nach Anspruch 1 oder 2, **dadurch gekennzeichnet, dass** die Hydraulikpumpe (11) derart schaltbar und/oder regelbar ist, dass sich über einen weiten Drehzahlbereich ein in etwa konstanter Volumenstrom einstellt, der zum Befüllen und Regeln des Retarders ausreichend ist.

4. Hydrodynamischer Retarder nach einem der Ansprüche 1 bis 3, **dadurch gekennzeichnet, dass** der in etwa konstante Volumenstrom der Hydraulikpumpe (11) mittels eines Ventils (16) abschaltbar und/oder auf einen niedrigeren Wert verstellbar ist.

5. Hydrodynamischer Retarder nach Anspruch 4, **dadurch gekennzeichnet, dass** für die Hydraulikpumpe (11) mindestens zwei Schaltpositionen vorgesehen sind.

6. Hydrodynamischer Retarder nach Anspruch 5, **dadurch gekennzeichnet, dass** eine Schaltposition einer Null- oder Minimalförderung im Nichtbremsbetrieb und dass eine weitere Schaltposition einer Voll- oder einer definierten Teilförderung im Bremsbetrieb entspricht.

7. Hydrodynamischer Retarder nach Anspruch 1 oder 2, **dadurch gekennzeichnet, dass** die Hydraulikpumpe (11) über ein Regelventil (14) und die Verstellmechanik (13) mittels einer variablen Größe, hydraulisch, pneumatisch oder elektromagnetisch derart ansteuerbar ist, dass ein gewünschter Druck, der der Retarderdruck oder eine das Bremsmoment charakterisierende Größe ist, einstellbar ist.

8. Hydrodynamischer Retarder nach einem der vorangehenden Ansprüche, **dadurch gekennzeichnet, dass** er mit dem Getriebe einen gemeinsamen Ölhaushalt aufweist.

9. Hydrodynamischer Retarder nach einem der Ansprüche 1 bis 7 **dadurch gekennzeichnet, dass** er einen eigenen Ölhaushalt aufweist.

10. Hydrodynamischer Retarder nach einem der vorangehenden Ansprüche, **dadurch gekennzeichnet, dass** die Hydraulikpumpe (11) elektrisch, hydraulisch oder pneumatisch ansteuerbar bzw. zuschaltbar ist.

11. Verfahren zur Steuerung eines hydrodynamischen Retarders mit einer Hydraulikpumpe (11), **dadurch gekennzeichnet, dass** das Fördervolumen der Hydraulikpumpe (11) verstellt wird, derart, dass der Volumenstrom unabhängig von der Fahrzeuggeschwindigkeit bzw. Gelenkwellendrehzahl oder Retarderdrehzahl über eine Verstellmechanik (13) an der verstellbaren Hydraulikpumpe (11) eingestellt wird.

12. Verfahren nach Anspruch 11, **dadurch gekennzeichnet, dass** der Volumenstrom der Hydraulikpumpe (11) über ein Ventil (14) und die damit verbundene Verstellmechanik (13) eingestellt wird.

13. Verfahren nach Anspruch 11 oder 12, **dadurch gekennzeichnet, dass** die Hydraulikpumpe (11) derart geschalten und/oder geregelt wird, dass sich über einen weiten Drehzahlbereich ein in etwa konstanter Volumenstrom einstellt, der zum Befüllen und Regeln des Retarders ausreicht.

14. Verfahren nach einem der Ansprüche 11 bis 13, **dadurch gekennzeichnet, dass** der in etwa konstante Volumenstrom der Hydraulikpumpe (11) mittels eines Ventils (16) auf einen maximalen Druck begrenzt wird.

15. Verfahren nach Anspruch 14, **dadurch gekennzeichnet, dass** die Hydraulikpumpe (11) mindestens in zwei Schaltpositionen schaltbar ist, wobei eine Schaltposition einer Null- oder Minimalförderung im Nichtbremsbetrieb und dass eine weitere Schaltposition einer Voll- oder einer definierten Teilförderung im Bremsbetrieb entspricht.

16. Verfahren nach Anspruch 11 oder 12, **dadurch gekennzeichne** t , dass die Hydraulikpumpe (11) über ein Regelventil (14) und eine Verstellmechanik (13) mittels einer variablen Größe, hydraulisch, pneumatisch oder elektromagnetisch derart angesteuert wird, dass ein gewünschter Druck, der der Retarderdruck oder eine das Bremsmoment charakterisierende Größe ist, eingestellt wird.

17. Verfahren nach einem der Ansprüche 11 bis 16, **dadurch** g**ekennzeichnet,** dass die Hydraulikpumpe (11) elektrisch, hydraulisch oder pneumatisch ansteuert bzw. zugeschaltet wird.

18. Verfahren nach einem der Ansprüche 11 bis 17, **dadurch gekennzeichnet, dass** es mit einem hydrodynamischen Retarder nach einem der Ansprüche 1 bis 9 durchgeführt wird.

## Claims

1. Hydrodynamic retarder for a motor vehicle with a circuit for control of the retarder (1) comprising a hydraulic pump (11), a heat exchanger (3), a valve (4, 5) and a control unit (2), **characterized in that** the hydraulic pump is an adjustable pump (11) whose delivery rate is adustable in such a manner that the volume flow of the hydraulic pump (11) can be adjusted via an adjusting mechanism (13) on the adjustable hydraulic pump (11) irrespective of the vehicle speed, or propshaft speed, or retarder speed.

2. Hydrodynamic retarder according to claim 1, **characterized in that** the volume flow of the hydraulic pump (11) can be adjusted via a valve (14) and the adjusting mechanism (13) connected to it.

3. Hydrodynamic retarder according to claim 1 or 2, **characterized in that** the hydraulic pump (11) is shiftable and/or controllable in such a manner that a roughly constant volume flow is realized for a wide speed range, sufficient for filling and controlling the retarder.

4. Hydrodynamic retarder according to one of the claims 1 thru 3, **characterized in that** the roughly constant volume flow of the hydraulic pump (11) can be shut off and/or set to a lower value by means of a valve (16).

5. Hydrodynamic retarder according to claim 4, **characterized in that** at least two control positions are provided for the hydraulic pump (11).

6. Hydrodynamic retarder according to claim 5, **characterized in that** one control position corresponds to zero or minimal delivery in the nonbraking mode and another control position corresponds to full or defined partial delivery in the braking mode.

7. Hydrodynamic retarder according to claim 1 or 2, **characterized in that** the hydraulic pump (11) can be controlled hydraulically, pneumatically or electromagnetically via a control valve (14) and the adjusting mechanism (13) by means of a variable in such a manner that the desired pressure, which is the retarder pressure or a parameter characterizing the braking torque, can be set.

8. Hydrodynamic retarder according to one of the preceding claims, **characterized in that** it shares a common oil supply with the transmission.

9. Hydrodynamic retarder according to one of the claims 1 thru 7, **characterized in that** it has its own oil supply.

10. Hydrodynamic retarder according to one of the preceding claims, **characterized in that** the hydraulic pump (11) is electrically, hydraulically or pneumatically controllable or engageable.

11. Method for controlling a hydrodynamic retarder with a hydraulic pump (11), **characterized in that** the delivery volume of the hydraulic pump (11) is adjusted in such a manner that the volume flow is set via an adjusting mechanism (13) on the hydraulic pump (11) irrespective of the vehicle speed, or the propshaft speed, or the retarder speed.

12. Method according to claim 11, **characterized in that** the volume flow of the hydraulic pump (11) is set via a valve (14) and the adjusting mechanism (13) connected to it.

13. Method according to claim 11 or 12, **characterized in that** the hydraulic pump (11) is shifted and/or controlled in such a manner that a roughly constant volume flow is realized for a wide speed range, sufficient for filling and controlling the retarder.

14. Method according to one of the claims 11 thru 13, **characterized in that** the roughly constant volume flow of the hydraulic pump (11) is limited to a maximum pressure by a valve (16).

15. Method according to claim 14, **characterized in that** the hydraulic pump (11) is controllable in at least two control positions, with one control position corresponding to a zero or minimal delivery in the nonbraking mode and another control position corresponding to a full or defined partial delivery in the braking mode.

16. Method according to claim 11 or 12, **characterized in that** the hydraulic pump (11) is controlled hydraulically, pneumatically or electromagnetically via a control valve (14) and an adjusting mechanism (13) by means of a variable in such a manner that a desired pressure, which is the retarder pressure or a parameter characterizing the braking torque, is set.

17. Method according to one of the claims 11 thru 16, **characterized in that** the hydraulic pump (11) is electrically, hydraulically, or pneumatically controlled or engaged.

18. Method according to one of the claims 11 thru 17, **characterized in that** it is realized with a hydrodynamic retarder according to one of the claims 1 thru 9.

## Revendications

1. Ralentisseur hydrodynamique pour un véhicule automobile doté d'un circuit pour la commande du ralentisseur (1), celui-ci comprenant une pompe hydraulique (11), un échangeur thermique (3), une soupape (4, 5) et une unité de commande et de régulation (2), **caractérisé en ce que** la pompe hydraulique est une pompe réglable (11), dont le débit peut être réglé, et cela de façon à ce que le débit de la pompe hydraulique (11) pourra être réglé indépendamment de la vitesse du véhicule ou de la vitesse de l'arbre à cardan ou du régime du ralentisseur par l'intermédiaire d'un mécanisme de réglage (13) disposé au niveau de la pompe hydraulique réglable (11).

2. Ralentisseur hydrodynamique selon la revendication 1, **caractérisé en ce que** le débit de la pompe hydraulique (11) pourra être réglé à l'aide d'une soupape (14) et du mécanisme de réglage y associé (13).

3. Ralentisseur hydrodynamique selon la revendication 1 ou 2, **caractérisé en ce que** la pompe hydraulique (11) pourra être enclenchée et/ou réglée de façon à établir sur une large plage de régime un débit presque constant, celui-ci étant suffisant pour le remplissage et le réglage du ralentisseur.

4. Ralentisseur hydrodynamique selon une des revendications 1 à 3, **caractérisé en ce que** le débit presque constant de la pompe hydraulique (11) peut être coupé et/ou réglé à une valeur inférieure à l'aide d'une soupape (16).

5. Ralentisseur hydrodynamique selon la revendication 4, **caractérisé en ce que** pour la pompe hydraulique (11) sont prévues au moins deux positions de commande.

6. Ralentisseur hydrodynamique selon la revendication 5, **caractérisé en ce que** une position de commande correspond à un débit nul ou à un débit minimum lorsque le système n'est pas en mode de freinage et **en ce que** une autre position de commande correspond à un débit total ou à un débit partiel défini en mode de freinage.

7. Ralentisseur hydrodynamique selon la revendication 1 ou 2, **caractérisé en ce que** la pompe hydraulique (11) peut être commandée par l'intermédiaire d' une soupape de régulation (14) et le mécanisme de réglage (13) à l'aide d'un paramètre variable par voie hydraulique, pneumatique ou électromécanique de façon à ce qu'il est possible de régler une pression souhaitée, celle-ci étant la pression du ralentisseur ou une grandeur caractérisant le couple de freinage.

8. Ralentisseur hydrodynamique selon une des revendications précédentes, **caractérisé en ce que** celui-ci a un circuit d'huile en commun avec la boîte de vitesses.

9. Ralentisseur hydrodynamique selon une des revendications 1 à 7, **caractérisé en ce que** celui-ci possède un propre circuit d'huile.

10. Ralentisseur hydrodynamique selon une des revendications précédentes, **caractérisé en ce que** la pompe hydraulique (11) peut être commandée ou enclenchée par voie électrique, hydraulique ou pneumatique.

11. Procédé de commande d'un ralentisseur hydrodynamique doté d'une pompe hydraulique (11), **caractérisé en ce que** le débit de la pompe hydraulique (11) est réglé de façon à ce que le débit est régulé indépendamment de la vitesse du véhicule ou de la vitesse de l'arbre à cardan ou du régime du ralentisseur par l'intermédiaire d'un m'ßecanisme de réglage (13) disposé au niveau de la pompe hydraulique réglable (11).

12. Procédé selon la revendication 11, **caractérisé en ce que** le débit de la pompe hydraulique (11) est réglé à l'aide d'une soupape (14) et du mécanisme de réglage y associé (13).

13. Procédé selon la revendication 11 ou 12, **caractérisé en ce que** la pompe hydraulique (11) est enclenchée et/ou réglée de façon à ce qu'il sera possible d'établir sur une large plage de régime un débit presque constant, celui-ci étant suffisant pour le remplissage et le réglage du ralentisseur.

14. Procédé selon une des revendications 11 à 13, **caractérisé en ce que** le débit presque constant de la pompe hydraulique (11) est limité à une pression maximale à l'aide d'une soupape (16).

15. Procédé selon la revendication 14, **caractérisé en ce que** la pompe hydraulique (11) peut être commandée au moins dans deux positions de commande, sachant que une position de commande correspond à un débit nul ou à un débit minimum lorsque le système n'est pas en mode de freinage et **en ce que** une autre position de commande correspond à un débit total ou à un débit partiel défini en mode de freinage.

16. Procédé selon la revendication 11 ou 12, **caractérisé en ce que** la pompe hydraulique (11) est commandée par l'intermédiaire d' une soupape de régulation (14) et un mécanisme de réglage (13) à l'aide d'un paramètre variable par voie hydraulique, pneumatique ou électromécanique de façon à ce qu'il est possible de régler une pression souhaitée, celle-ci étant la pression du ralentisseur ou une grandeur caractérisant le couple de freinage.

17. Procédé selon une des revendications 11 à 16, **caractérisé en ce que** la pompe hydraulique (11) est commandée ou enclenchée par voie électrique, hydraulique ou pneumatique.

18. Procédé selon une des revendications 11 à 17, **caractérisé en ce que** celui-ci est exécuté à l'aide d'un ralentisseur hydrodynamique selon une des revendications 1 à 9.
